Europäisches Patentamt

European Patent Office

Office européen des brevets

(19)

(11) **EP 1 095 718 B1**

(12) **FASCICULE DE BREVET EUROPEEN**

(45) Date de publication et mention
de la délivrance du brevet:
**10.12.2003 Bulletin 2003/50**

(51) Int Cl.⁷: **B21D 39/03**, B21D 22/00,
B21D 53/88, F16S 1/10,
B21D 53/04, B62D 27/02

(21) Numéro de dépôt: **00402966.6**

(22) Date de dépôt: **25.10.2000**

(54) **Tôle composite destinée à l'emboutissage**

Verbundblech zum Tiefziehen

Composite sheet for deep drawing

(84) Etats contractants désignés:
**AT BE CH CY DE DK ES FI FR GB GR IE IT LI LU
MC NL PT SE**

(30) Priorité: **26.10.1999 FR 9913326**

(43) Date de publication de la demande:
**02.05.2001 Bulletin 2001/18**

(73) Titulaire: **USINOR
92800 Puteaux (FR)**

(72) Inventeurs:
• **Schmit, Francis
60250 Ansacq (FR)**
• **Sanadres, Michel
60700 Pont Saint Maxence (FR)**
• **Charbonnet, Philippe
60300 Senlis (FR)**

(74) Mandataire: **Neyret, Daniel et al
c/o Cabinet Lavoix,
2, Place d'Estienne d'Orves
75441 Paris Cedex 09 (FR)**

(56) Documents cités:
EP-A- 0 953 495          WO-A-92/11162
DE-A- 19 621 944        DE-B- 1 527 957
GB-A- 2 187 409          US-A- 3 971 688
US-A- 4 374 890          US-A- 4 727 232

EP 1 095 718 B1

**Description**

L'invention concerne une tôle composite présentant des variations locales d'épaisseur, obtenues généralement par collages localisés de flans de tôle de renforcement ou « doubleurs » sur une tôle principale d'épaisseur homogène ; une telle tôle composite est souvent qualifiée de « tôle patchwork » en langue anglaise.

Ce type de tôle composite permet de concourir à l'allégement des structures automobiles, puisque seules les zones les plus sollicitées sont dotées de flans de renforcement collés, c'est à dire sont « doublées » ; la tôle composite présente alors l'épaisseur la plus faible dans les zones non renforcées et l'épaisseur la plus importante dans les zones renforcées.

Ces tôles composites doivent pouvoir être embouties comme des tôles classiques d'épaisseur homogène, afin, notamment, de réaliser des pièces de carrosserie ou de structure automobile ; le problème majeur est alors la tenue des joints de colle, reliant les « doubleurs » à la tôle, aux contraintes et aux déformations appliquées pendant l'opération d'emboutissage.

Les documents DE 4307563 (BMW) et DE 195 24 235 (VW) décrivent des tôles composites de ce type comportant une tôle principale localement renforcée par des doubleurs collés en sur-épaisseur dans les zones à renforcer ; les doubleurs peuvent présenter des épaisseurs et propriétés mécaniques différentes, adaptées aux besoins de renforcement propres à chaque zone à renforcer.

Des adhésifs envisagés pour réaliser ce type de tôles sont par exemple de type époxy ; malheureusement, comme le confirment les résultats présentés ci-après, les tôles composites obtenues résistent mal à des opérations d'emboutissage, notamment parce que :

- les joints de colle ne sont généralement pas assez solides pour résister aux contraintes de déformations appliquées durant l'opération de mise en forme,
- les joints de colle ne sont généralement pas assez ductiles pour se déformer avec les éléments de tôle durant l'opération de mise en forme.

Pour éviter ces inconvénients, DE 4307563 et EP 823297 décrivent un procédé de fabrication de pièces mises en forme en tôle composite de ce type, comme des pièces de carrosserie automobile, dans lesquelles :

- avant la mise en forme, la solidarisation des différents éléments en tôle de la tôle composite n'est que partielle (on utilise l'effet « pégueux » de la colle) de manière à ce que le joint de collage de ces éléments puisse subir sans dommage les déformations appliquées lors de l'opération de mise en forme,
- après la mise en forme, la solidarisation des différents éléments de la tôle composite est renforcée par réticulation des joints de collage, qui n'ont plus à subir de déformation.

Ce procédé présente des inconvénients :

- on est limité aux systèmes de collage à adhésif réticulable, ce qui exclut les colles thermoplastiques,
- avant mise en forme, la tôle composite doit être manipulée avec précautions, pour éviter tout risque de changement de position des « doubleurs »,
- après mise en forme, il convient de rajouter une étape de cuisson qui est économiquement pénalisante.

L'invention a pour but d'éviter les inconvénients précités en proposant un système de collage entre les éléments de la tôle composite qui, bien que complètement activé avant la mise en forme, possède les propriétés mécaniques intrinsèques requises pour ne pas être détérioré lors d'une opération de mise en forme du type emboutissage.

A cet effet, l'invention a pour objet une tôle composite destinée à l'emboutissage comprenant au moins une tôle principale et au moins un flan de tôle de doublage collé en sur-épaisseur sur une zone à renforcer de ladite tôle principale à l'aide d'un système de collage, caractérisée en ce que ledit système de collage est choisi, appliqué et, le cas échéant, réticulé, de manière à satisfaire les critères intrinsèques suivants dans le domaine de température de l'opération d'emboutissage à laquelle elle est destinée :

- un taux de restitution d'énergie critique en mode I (traction) supérieur à 1500 J/m$^2$,
- un taux de restitution d'énergie critique en mode II (cisaillement) supérieur à 2000 J/m$^2$.

L'indication selon laquelle ledit système de collage est, le cas échéant, réticulé, signifie que si ce système de collage comprend des composés réticulables, le système de collage de la tôle composite est effectivement réticulé.

Ledit domaine de température correspond à la température que la tôle composite atteint pendant l'opération d'emboutissage à laquelle elle est destinée, plus précisément à la température du système de collage de cette tôle ;

dans des opérations usuelles, ce domaine de températures correspond généralement à l'intervalle 15°C - 40°C ; les critères de restitution d'énergie critique sont donc considérés dans ce domaine.

L'invention peut également présenter une ou plusieurs des caractéristiques suivantes :

- ledit système de collage est choisi de manière à satisfaire en outre le critère relatif suivant : une déformation à la rupture supérieure à celle du métal de ladite tôle principale et à celle du métal dudit flan doubleur, de préférence supérieure à 40%.
- ledit système de collage comprend une ou plusieurs résines thermoplastiques et/ou thermodurcissables et/ou élastomériques, qui peuvent être liées ou non par des liaisons physiques et/ou chimiques.
- l'épaisseur dudit système de collage est comprise entre 0,05 et 5 mm.
- ledit système de collage comprend un matériau polymère choisi dans le groupe comprenant les polyoléfines et les polychlorures de vinyle.
- ledit système de collage comprend un matériau polymère polyoléfine caractérisé par une température de fusion supérieure à 120°C.
- ledit système de collage comprend un matériau polymère polyoléfine caractérisé par une température de fusion supérieure à 160°C.
- ledit système de collage comprend une âme en matériau polymère et deux couches minces d'adhésif, l'une étant intercalée entre ladite tôle principale et une face de l'âme, l'autre étant intercalée entre ladite tôle de doublage et l'autre face de l'âme ; de préférence, l'épaisseur de chacune desdites couches minces est alors comprise entre 5 et 50 µm.

L'invention a également pour objet un procédé de fabrication d'une pièce formée à l'aide d'une tôle composite selon l'une quelconque des revendications précédentes caractérisé en ce qu'il comprend les étapes dans lesquelles :

- on prépare ladite tôle principale et l'au moins un flan de doublage,
- puis, en intercalant le système de collage, on applique ledit flan de doublage sur la zone à renforcer de ladite tôle principale,
- puis, le cas échéant, on fait réticuler ledit système de collage de manière à obtenir ladite tôle composite,
- puis on met en forme par emboutissage ladite tôle composite obtenue.
  L'indication selon laquelle ledit système de collage est, le cas échéant, réticulé, signifie que si ce système de collage comprend des composés réticulables, le système de collage de la tôle composite est effectivement réticulé avant la mise en forme.

On obtient ainsi des pièces mises en forme, efficacement renforcées sans avoir à mettre en oeuvre impérativement une étape de cuisson après mise en forme.

L'invention sera mieux comprise à la lecture de la description qui va suivre, donnée à titre d'exemple non limitatif, et en référence aux figures annexées sur lesquelles ;

- la figure 1 représente une tôle composite selon l'invention ; la figure 2 représente une zone renforcée de cette tôle, après déformation ;
- les figures 3 et 4 représentent une tôle composite en cours de déformation dans une installation d'emboutissage ;
- les figures 5 à 7 concernent la méthode de mesure du taux Glc d'un système de collage les figures 5 et 6 représentent l'éprouvette à tester et le montage utilisés, la figure 7 illustre le type de résultats obtenus : effort P (échelle : 0,1 - 0,2 - 0,3 kN) en fonction du déplacement vertical D (échelle : 1 à 10 mm).
- les figures 8 et 9 concernent la méthode de mesure du taux Gllc d'un système de collage : la figure 8 représente l'éprouvette à tester et le montage utilisés, la figure 9 illustre schématiquement les résultats obtenus effort P en fonction du déplacement vertical D.
- les figures 10 et 11 concernent la méthode d'évaluation de l'aptitude à l'emboutissage d'un système de collage : les figures 10A et 10B représentent l'éprouvette à tester, la figure 11 représente le montage utilisé pour l'essai d'emboutissage.

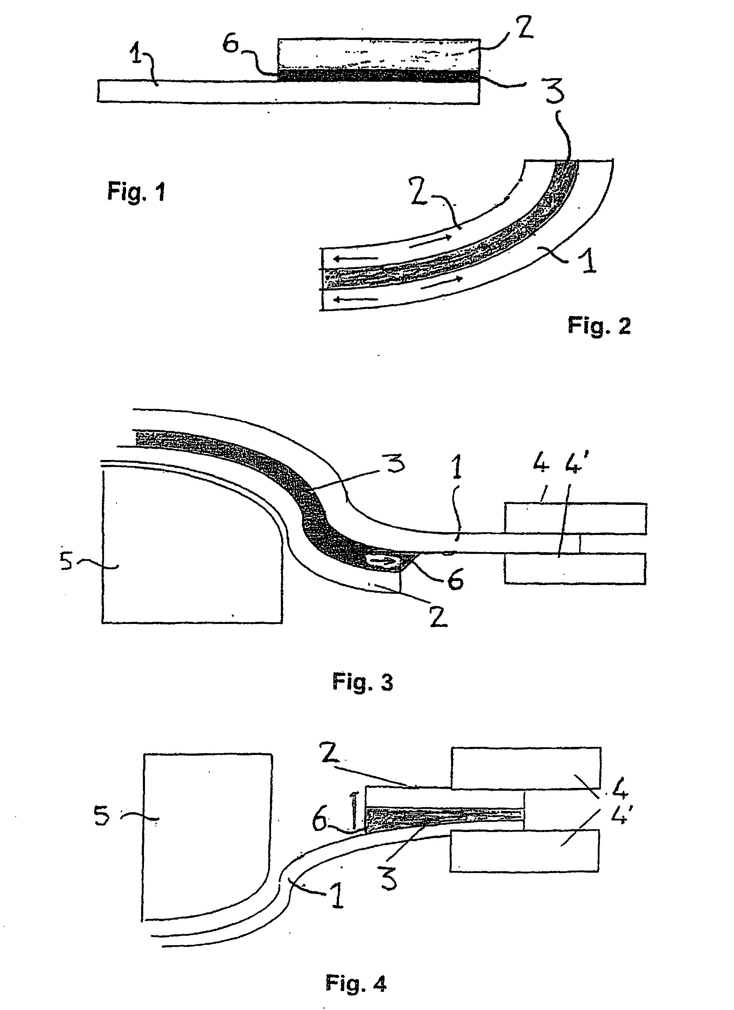

La figure 1 représente une tôle composite comprenant une tôle métallique principale 1 et un flan de tôle de renforcement ou doubleur 2 collé sur la tôle principale 1 par l'intermédiaire du système de collage 3.

Le système de collage 3 utilisé pour l'assemblage des éléments de la tôle composite, doit présenter, selon l'invention, des caractéristiques intrinsèques portant sur les points suivants :

- le système de collage doit présenter un niveau d'adhérence suffisant vis à vis de la surface des tôles utilisées de manière à éviter des phénomènes de délamination aux interfaces «tôle/adhésif » sous l'effet des fortes déformations plastiques de l'acier pendant l'emboutissage ;

- le système de collage doit présenter une ductilité intrinsèque suffisante pour pouvoir suivre sans détérioration les déformations plastiques de l'acier au niveau des zones dotées de doubleurs, comme représenté à la figure 2 ; il doit ainsi présenter un niveau de déformation en traction du même ordre de grandeur que celui des éléments de la tôle composite ;
- enfin, il est primordial que le système de collage soit adapté pour transmettre, pendant l'opération d'emboutissage, les contraintes de déformation d'un élément à l'autre de la tôle composite, notamment au niveau des singularités géométriques des tôles composites ; les singularités géométriques concernent les zones de variation d'épaisseur, les zones de bordures des « doubleurs » et/ou les zones de limite des joints collés ; certaines de ces singularités sont assimilables à des amorces de fissures au niveau de ces singularités, les contraintes à transmettre sont à la fois en mode de pelage (ou mode de traction, dit mode I) et en mode de cisaillement (ou mode II) ; pour qu'un système de collage résiste fortement au niveau de ces singularités à la délamination en mode pelage (mode I) et en mode cisaillement (mode II), il doit présenter une ténacité élevée.

Les figures 3 et 4 représentent une tôle composite en cours de déformation dans une installation d'emboutissage comportant deux mâchoires 4, 4' de serre-flan et un poinçon 5 ; la zone de singularité 6 correspond à la limite du doubleur 2 et à celle du joint de collage 3 ; en se reportant à la figure 4, on voit que cette zone 6 est soumise à des contraintes de pelage (mode I ; voir flèche) provoquant un écartement entre le doubleur 2 et la tôle métallique principale 1 à cet endroit (voir figure 4); en se reportant à la figure 3, on voit que cette zone 6 est soumise à des contraintes de cisaillement (mode II ; voir flèches) provoquant la forme en biais de la limite du joint de colle dans la zone 6 (voir figure 3).

Le niveau d'adhérence est un critère classique de définition d'un système de collage relativement à la surface à laquelle il doit adhérer ; ce critère n'est pas intrinsèque puisque la surface à laquelle adhérer influence le niveau d'adhérence ; la ductilité intrinsèque est un autre critère utilisé classiquement pour la définition des systèmes de collage des tôles composites aptes à l'emboutissage.

Les critères portant sur la transmission des contraintes sans rupture à l'endroit de zones de singularités de la tôle composite sont la base de l'apport de l'invention à l'état de la technique ; selon l'invention, on va considérer qu'une rupture à cet endroit procède par apparition et propagation d'une fissure dans le système de collage, puis on va proposer une méthode pour quantifier le comportement mécanique du système de collage à cet endroit et déterminer des critères que devrait satisfaire le système de collage pour que les tôles composites réalisées sur la base de ce système soient aptes à l'emboutissage sans détérioration ; on va ensuite vérifier expérimentalement la pertinence de ces critères, par des essais d'emboutissage de tôles composites utilisant des systèmes de collage très différents.

Pour quantifier les critères de résistance à la contrainte du système de collage à l'endroit des zones de singularités, on propose donc d'utiliser les grandeurs suivantes :

- le taux de restitution d'énergie critique en mode I, noté GIc: cette grandeur caractérise la résistance à la fissuration d'un joint collé subissant un effort d'ouverture localisé, c'est à dire un effort de traction perpendiculaire au plan de joint ;
- Le taux de restitution d'énergie critique en mode II, noté GIIc : cette grandeur caractérise la résistance à la fissuration du joint collé subissant un effort de cisaillement, c'est à dire un effort parallèle au plan du joint collé.

On a constaté, selon l'invention, que les systèmes de collage qui satisfont à la fois les critères classiques portant sur l'adhérence et la ductilité, mais également ces nouveaux critères portant sur les valeurs intrinsèques des taux de restitution d'énergie critique en mode I et en mode II du système de collage, permettaient d'obtenir des tôles composites localement « doublées » tout à fait aptes à l'emboutissage, sans risque de détérioration des joints de colle entre les doubleurs et la tôle principale.

On a constaté ainsi que des systèmes de collage très différents permettaient d'obtenir des tôles composites aptes à l'emboutissage du moment qu'ils satisfont, outre les critères classiques, les nouveaux critères quantitatifs suivants :

- GIc > 1500 J/m$^2$,
- - GIIc > 2000 J/m$^2$.

Des essais d'adhérence et d'emboutissage effectués sur des tôles composites très différentes ont donné des résultats concluants du moment que le système de collage satisfaisait ces critères et qu'il présentait un allongement à la rupture supérieur au métal de ces tôles.

On va maintenant décrire différentes variantes de tôles composites selon l'invention, présentant des variations locales d'épaisseur obtenues par collages localisés de flans de tôle de renforcement ou « doubleurs » sur une tôle principale d'épaisseur homogène.

On va ensuite décrire différentes variantes de fabrication de telles tôles. Les tôles composites selon l'invention comprennent donc :

- différents éléments métalliques : tôle principale et doubleurs,
- un système de collage pour solidariser les doubleurs à la tôle principale.

Pour les éléments métalliques, tous les types de tôles métalliques peuvent être employés (par exemple acier, aluminium, cuivre) ; dans le cas des tôles d'acier, celles-ci peuvent être nues (huilées ou dégraissées), revêtues d'un alliage métallique (huilées ou dégraissées), traitées avec un composé minéral (par exemple du type phosphatation) huilées ou non, ou revêtues d'un matériau organique (par exemple : primaire, laque de finition, revêtement organique mince) ; en cas de revêtement organique, celui-ci peut contenir des charges métalliques de manière à ce que la tôle reste soudable.

Concernant le système de collage, tout matériau polymère ou complexe de polymères peut être utilisé, du moment qu'il aboutit à un système de collage satisfaisant les critères propres à l'invention ; en particulier :

- il peut comprendre une ou plusieurs résines thermoplastiques et/ou thermodurcissables et/ou élastomériques, qui peuvent être liées ou non par des liaisons physiques et/ou chimiques.
- il peut comprendre une résine thermoplastique (par exemple de type polyester-mélamine thermoplastique ou de type polyéthylène) mise en solution dans une résine thermodurcissable (par exemple de type époxy ou polyester-mélamine).

De préférence, de manière à satisfaire ces critères, l'au moins un polymère est choisi dans le groupe comprenant les polyoléfines et les polychlorures de vinyle. Compte tenu des applications visées relevant principalement du secteur automobile, il est conseillé d'utiliser au moins un polymère polyoléfine caractérisé par une température de fusion supérieure à 120°C. Cette caractéristique doit permettre de satisfaire les impératifs de tenue en service des applications visées, qui sont amenées à évoluer dans des environnements pouvant atteindre des températures de 100°C. Pour les applications nécessitant une bonne compatibilité des tôles composites vis à vis des cycles de chauffage des opérations de mise en peinture des lignes de ferrage des constructeurs d'automobiles, le choix se porte plus précisément sur des polymères polyoléfines caractérisés par une température de fusion supérieure à 160°C.

Le matériau polymère ou complexe de polymères utilisé pour former le système de collage des tôles composites selon l'invention peut également comprendre des additifs comme des composés chimiques et/ou métalliques et/ou minéraux :

- des composés métalliques, telles des charges de zinc, de nickel ou de phosphure de fer, afin, notamment, d'assurer la conductivité électrique entre la tôle métallique principale et chacune des tôles de renforcement de la tôle composite et de favoriser ainsi, au niveau des zones renforcées de la tôle composite, les opérations de soudage par points et de mise en peinture faisant suite aux opérations d'emboutissage.
- des composés minéraux, tels des charges de talc, de craie, de chaux, de silice, afin, notamment, d'ajuster la viscosité du polymère lorsque celui-ci se présente sous une forme solvantée ou pâteuse et afin de faciliter l'application du matériau polymère lors de la réalisation du système de collage ces composés minéraux peuvent également permettre d'améliorer la tenue en température du système de collage lors des opérations de mise en peinture pouvant succéder aux opérations d'emboutissage.
- des composés chimiques, tels des composés à base d'anhydride maléique, de silanes, d'acides acryliques, afin, notamment, d'obtenir une adhérence directe du matériau polymère (ou complexe de polymères) sur les surfaces à encoller sous l'effet du cycle de durcissement appliqué avant les opérations d'emboutissage ; l'ajout de composés chimiques, comme des charges élastomériques, peut également servir à obtenir un système de collage satisfaisant les critères de ductilité et de ténacité propres à l'invention.

Ces additifs sont classiquement introduits au sein du matériau polymère d'application du premier cycle de durcissement qui permet au système de collage d'atteindre les performances satisfaisant l'ensemble des critères propres à l'invention ; après réalisation et durcissement du système de collage, les liens entre ses différents composés et la résine du polymère peuvent être plus ou moins nombreux, plus ou moins forts et de différente nature (liaisons physiques et/ou liaisons chimiques).

L'épaisseur du système de collage de la tôle composite selon l'invention est également quelconque, du moment que, globalement, le système de collage satisfait les critères propres à l'invention; cette épaisseur est classiquement comprise entre 5 µm et 5 mm ; de préférence, cette épaisseur est comprise entre 50 µm et 1 mm.

Selon une variante, le système de collage comprend une âme en matériau polymère.

Afin notamment de faciliter la fabrication du système de collage, une couche mince d'adhésif est alors de préférence appliquée sur les deux faces de l'âme et/ou sur les surfaces à coller de la tôle principale et des doubleurs cette couche mince d'adhésif est destinée à assurer la liaison avec, d'une part, la surface du doubleur, et avec, d'autre part, la surface de la tôle principale ; elle évite l'ajout d'agents d'adhérence spécifiques au sein du matériau polymère (tels certains des composés organiques cités ci-dessus).

L'âme se présente généralement sous forme de film solide.

L'épaisseur de la couche mince d'adhésif est largement inférieure à l'épaisseur de l'âme (après application du cycle de durcissement) tout en restant généralement supérieure à 1 $\mu$m; cette épaisseur est généralement comprise entre 5 et 50 $\mu$m.

La couche mince d'adhésif peut être appliquée indifféremment sur les deux surfaces du matériau polymère ou sur les faces des tôles destinées à être collées, dans tous les cas, avant la réalisation complète du système de collage.

Pour la dépose de l'adhésif sur les tôles d'acier, on utilise des procédés classiques d'application, comme par exemple la pulvérisation, l'application par roll-coat (en langue anglaise), l'application à la spatule, l'application par sérigraphie. Dans le cas des tôles servant à la réalisation des flans principaux, le choix du procédé d'application est orienté de préférence vers une application localisée de la couche d'adhésif au niveau des zones à coller. Cependant pour des facilités de réalisation, cette couche mince peut être appliquée sur toute la surface de la tôle du flan principal ; dans ce cas, des charges métalliques (telles des charges de zinc ou de phosphure de fer) peuvent être introduites au sein de l'adhésif pour faciliter les opérations ultérieures d'assemblage par soudage des pièces réalisées à partir de cette tôle composite.

Pour la dépose de l'adhésif sur les deux surfaces du matériau polymère, on utilise de préférence des procédés de co-extrusion (co-extrusion de deux couches d'adhésif sur les deux faces du matériau polymère). D'autres procédés comme la pulvérisation, l'application par roll-coat (en langue anglaise), l'application à la spatule, l'application par sérigraphie, peuvent également être employés.

Pour fabriquer les tôles composites selon l'invention, on utilise des procédés classiques.

Ainsi le choix du mode de réalisation et d'application du système de collage dépend à la fois de paramètres économiques et techniques, dans lesquels interviennent, par exemple, la forme du matériau polymère utilisé (liquide, pâteuse, ou solide par exemple sous forme de film) et l'épaisseur finale du système de collage visée.

De même, les conditions de durcissement nécessaires à l'obtention des performances du système de collage dépendent des matériaux polymères (ou complexes de polymères) utilisés. A titre d'exemple, le durcissement peut être réalisé par stockage prolongé à température ambiante et/ou par chauffage.

Lors de la fabrication des tôles composites, on peut également compléter le système de collage par d'autres moyens de solidarisation, comme par soudage ou par assemblage mécanique (par exemple des vis ou des rivets) ; dans le cas de points de soudage, il convient de les réaliser avant l'application du premier cycle de durcissement. Ces moyens de solidarisation servent alors également à assurer la conductivité électrique entre les différents éléments de la tôle composite, et, le cas échéant, à maintenir une solidarisation suffisante entre les éléments de la tôle composite avant le cycle de durcissement.

Grâce aux systèmes de collage définis par l'invention, on obtient des tôles composites résistantes aux opérations d'emboutissage ; aucune opération de cuisson après mise en forme n'est nécessaire,

Les exemples non limitatifs suivants illustrent l'invention :

MATÉRIELS:

Une éprouvette est un échantillon de tôle composite, adapté pour la mise en oeuvre d'essais de caractérisation (voir § MÉTHODES ci-après); elle correspond à deux flans de tôle collés, au moins sur une partie de leur surface.

Les tôles utilisées pour la préparation des éprouvettes en tôle composite sont des tôles d'acier:

- pour les essais destinés à l'évaluation de Glc et Gllc (§1 et §2 ci-après) : tôle d'acier nu à haute limite élastique (Re>700 MPa) d'épaisseur : 4 mm
- pour les essais destinés à l'évaluation du niveau d'adhérence, de la ductilité et de l'aptitude à l'emboutissage (§3 et §4 ci-après), on utilise différentes tôles d'acier galvanisées d'épaisseur 0,8 mm (cf. ci-dessous pour précisions).

Pour certaines éprouvettes, on utilise des tôles identiques, mais qui sont préencollées ou prépeintes selon les caractéristiques décrites ci-après.

Les systèmes de collage utilisés comprennent au moins une couche d'adhésif de liaison des deux flans de tôle.

Certains systèmes comprennent en outre une âme en matériau polymère intercalée entre les deux flans de tôle ; dans ce cas, le système comprend deux couches d'adhésif de liaison, chacune entre l'un des flans de tôle et l'âme.

Le mode opératoire pour la préparation des éprouvettes dépend du système de collage utilisé (cf. ci-dessous) ; d'une manière générale, il comprend les étapes suivantes :

- découpe du flan principal et des doubleurs en tôles d'acier,
- le cas échéant, découpe des pièces d'âme du système de collage,
- le cas échéant, traitement de surface des pièces d'âme pour améliorer leur aptitude au collage,
- dégraissage du flan principal en acier et du doubleur en acier, par trempage pendant deux fois dix minutes dans un bain d'acétate d'éthyle agité aux ultra-sons,
- encollage avec l'adhésif des faces dégraissées du doubleur et du flan principal, au moins aux endroits que l'on souhaite renforcer : application de l'adhésif à la spatule ; épaisseur déposée calibrée à 25 µm à l'aide d'une racle et de cales d'épaisseur,
- le cas échéant, dépose des pièces d'âme sur la partie encollée du flan principal,
- accostage du doubleur sur la partie encollée du flan principal, ou, le cas échéant, sur les différentes pièces d'âme,
- si l'adhésif utilisé est thermodurcissable, traitement thermique de la tôle composite dans des conditions adaptées pour le durcissement de l'adhésif : on utilise en général à cet effet une presse chauffante, la pression appliquée correspondant à la pression d'accostage,
- refroidissement naturel à température ambiante et maintien pendant au moins 24 heures avant utilisation.

Les systèmes de collage utilisés sont les suivants :

♦ Système de collage 1 basé sur un adhésif époxy monocomposant :
   Cet adhésif est fabriqué par la société SAIM sous la référence 7980B ; il se présente sous une forme pâteuse; il est principalement constitué d'une résine DGEBA (DiGlycidylEther de Bis-phénol A) et d'un durcisseur dicydiamine ; il est utilisé dans l'industrie automobile pour des applications de collage structural et de soudo-collage.
   Le traitement thermique de réticulation après accostage comprend un palier de 30 minutes à 180°C.

♦ Système de collage 2 réalisé à partir d'une âme polystyrène d'épaisseur 0.2 mm et d'un adhésif polyuréthanne bicomposant.

Les tôles dans lesquelles on découpe le flanc principal et le doubleur sont donc ici des tôles pré-prépeintes SOLPRIME C™ comprenant, sur les deux faces, une couche d'environ 18 µm d'épaisseur d'une peinture dont le liant est à base de 75% environ de polyester-isocyanate et de 25% environ d'époxyphénolique.
Les caractéristiques mécaniques de ce système de collage (niveaux de ductilité et de ténacité en mode I et II) dépendent principalement de l'âme polystyrène ; l'adhésif polyuréthanne sert principalement à assurer le niveau d'adhérence souhaité entre cette âme polystyrène et les tôles d'acier déposé en très faible épaisseur à la surface de chaque tôle (inférieure à 25 µm), cet adhésif n'a pas d'influence majeure sur les caractéristiques mécaniques macroscopiques du système de collage.
=> précisions sur le mode opératoire de préparation des éprouvettes :

- Traitement de surface des pièces de polystyrène :

   - Dégraissage préalable des pièces au méthanol ou à l'isopropanol.
   - Immersion des pièces pendant 3 à 4 minutes dans une solution portée à une température comprise entre 100 et 105°C et constituée de 90 parts en poids d'acide sulfurique concentrée et de 10 parts en poids de dichromate de sodium.
   - Rinçage à l'eau distillée
   - Séchage à l'air chaud (Température < 50°C)

- Traitement thermique de durcissement de l'adhésif :

   - Température de palier de chauffage : comprise entre 60°C et 80°C
   - Temps de palier de chauffage : entre 30 et 120 minutes

♦ Système de collage 3 réalisé à partir d'une âme en polyméthylméthacrylate (PMMA) d'épaisseur 0.2 mm et d'un adhésif méthacrylate bicomposant.
   Comme pour le système de collage 2, les caractéristiques mécaniques de ce système de collage (niveaux de ductilité et de ténacité en mode I et II) vont être principalement conférées par l'âme PMMA; l'adhésif méthacrylate est déposé en très faible épaisseur à la surface de chaque tôle (inférieure à 25 µm).

=> précisions sur le mode opératoire de préparation des éprouvettes :

- Traitement de surface des pièces de polyméthylméthacrylate :

  - Dégraissage préalable des pièces à l'isopropanol ou au Méthyl Ethyl Cétone (essuyage ou immersion),
  - Abrasion avec des papiers de verre (180-400),
  - Dégraissage final des pièces à l'isopropanol ou au Méthyl Ethyl Cétone (essuyage)

- Traitement thermique de durcissement de l'adhésif :

  - Température de palier de chauffage : comprise entre 60°C et 80°C
  - Temps de palier de chauffage entre 15 et 60 minutes

◆ Système de collage 4 réalisé à partir de tôles préencollées et d'une âme polypropylène d'épaisseur égale à 0.2 mm :
  Les tôles dans lesquelles on découpe le flanc principal et le doubleur sont donc ici des tôles pré-encollées comprenant, sur une face, une couche de l'ordre de 15 μm d'épaisseur d'un adhésif comprenant des radicaux époxy et du polypropylène greffé.

=> précisions sur le mode opératoire de préparation des éprouvettes :

- Pas de dégraissage ni d'encollage du flan principal ni du doubleur, puisqu'ils sont pré-encollés,
- Traitement thermique de durcissement dé l'adhésif :

  - Température de palier de chauffage : comprise entre 200°C et 250°C
  - Temps de palier de chauffage : suffisamment long pour permettre un ramollissement de l'âme polypropylène et un bon mouillage de la tôle préencollée (de l'ordre de 40 secondes).

◆ Système de collage 5 réalisé à partir d'une âme polyéthylène d'épaisseur 0.2 mm et d'adhésif nitrile-phénolique.
  Là aussi, les caractéristiques mécaniques de ce système de collage vont être principalement conférées par l'âme polyéthylène.

=> précisions sur le mode opératoire de préparation des éprouvettes :

- Traitement de surface des pièces de polyéthylène : passage à la flamme oxydante.
- Encollage du flan principal et du doubleur : application au « Barre-coater » (en langue anglaise) épaisseur déposée par face inférieure à 25 μm ; séchage des faces encollées à l'air libre pendant 10 minutes avant dépose des pièces d'âme thermoplastique.
- Traitement thermique de durcissement de l'adhésif :
- Température de palier de chauffage : comprise entre 100°C et 120°C
- Temps de palier de chauffage : entre 40 et 120 minutes

◆ Système de collage 6 basé sur un film époxy tramé :
  Cet adhésif est fabriqué par la société NARMCO sous la référence Meltbond™ 1113 ; il est couramment utilisé par les constructeurs aéronautiques pour des applications de collage structural.
  Ce système de collage se présente sous la forme d'un film constitué par une trame enduite d'un adhésif de type époxy modifié ; l'épaisseur globale du film est voisine de 0.2 mm; cet adhésif époxy comprend principalement une résine de type DGRE (Diglycidyl Resorcinol Ether) et un durcisseur polyamine ; l'adhésif contient également un agent plastifiant de type CTBN (Carboxyl-Terminated-Butadiène Nitrile, en langue anglaise).
  Le traitement thermique de réticulation après accostage réside dans un cycle de chauffage comprenant un palier de 20 minutes à 143°C.

◆ Système de collage 7 réalisé à partir de tôles préencollées et d'une âme PVC (PolyVinylChlorure) d'épaisseur égale à 0.2 mm :
  Les tôles dans lesquelles on découpe le flanc principal et le doubleur sont donc ici des tôles pré-encollées comprenant, sur une face, une couche de l'ordre de 10 μm d'épaisseur d'un adhésif base polyester.

=> précisions sur le mode opératoire de préparation des éprouvettes :

- Pas de dégraissage ni d'encollage du flan principal ni du doubleur, puisqu'ils sont pré-encollés,

- Traitement thermique de durcissement de l'adhésif :

  - Température de palier de chauffage : comprise entre 170°C et 220°C
  - Temps de palier de chauffage : suffisamment long pour permettre un ramollissement de l'âme PVC et un bon mouillage de la tôle préencollée (entre 10 et 30 secondes).

On obtient des éprouvettes de tôles composites se différenciant par leur système de collage, répertorié 1 à 7.

MÉTHODES :

1) <u>Description de la méthode utilisée pour évaluer le taux de restitution d'énergie critique en mode I, noté Glc, d'un système de collage à partir d'essais d'ouverture sur une éprouvette DCB en mode I (traction) :</u>

« DCB » est l'abréviation de l'expression anglaise « Double Cantilever Beam ».

1.1/ Principe de l'essai

L'essai mis en oeuvre consiste à faire propager une fissure au sein d'un joint collé sollicité en traction et à mesurer la résistance de ce joint à la propagation de cette fissure.

1.2/ Géométrie et dimensions des éprouvettes pour les essais :

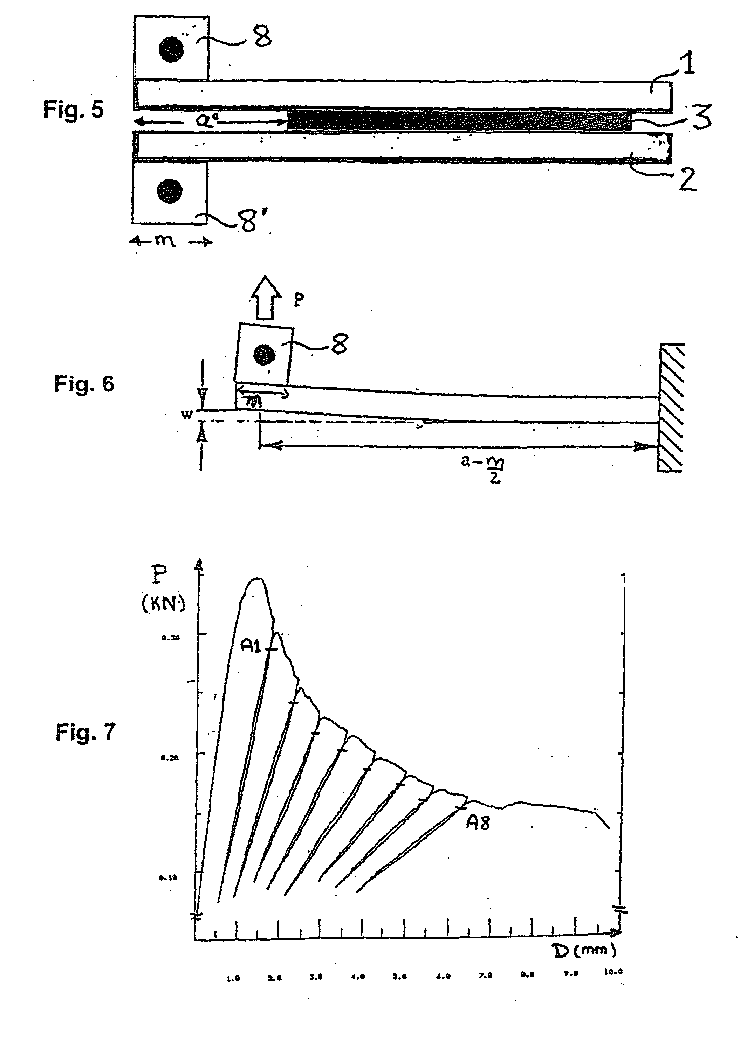

Une éprouvette « DCB » de tôle composite est préparée par collage de deux flans de tôle identiques; on utilise des tôles d'acier à haute limite élastique (supérieure à 700 MPa) et d'épaisseur égale à 4 mm ; l'épaisseur du joint collé à tester est calibrée à l'aide de cales en Téflon™ ; l'éprouvette obtenue est représentée sur la figure 5 : longueur 210 mm, largeur 25 mm ; l'épaisseur totale h est donc supérieure à 8 mm.

Une fissure initiale de longueur $a° = 70$ mm a été volontairement pratiquée au sein du joint collé testé, afin de faciliter l'amorçage de la fissuration lors de la mise en contrainte de traction ; l'épaisseur de cette fissure correspond à celle du joint collé ; on crée cette fissure au moment de la préparation de l'éprouvette, en plaçant une cale de Téflon™ au sein du joint collé.

Des têtes d'amarrage 8, 8' permettent de fixer l'éprouvette au dispositif de traction chargé d'imposer les efforts d'ouverture; la longueur m des têtes d'amarrage est de 30 mm ; chacune des têtes 8, 8' est percée en son centre d'un axe de diamètre 15 mm ; ces têtes d'amarrage sont fixées par vissage à l'une des extrémités de chaque flan de l'éprouvette.

L'utilisation de tôles d'acier à haute limite élastique (> 700 MPa) et de forte épaisseur ($\geq 4$ mm) doit permettre d'éviter que ces tôles ne se déforment par plastification au cours de l'essai tout en limitant la déformation globale de l'éprouvette au domaine de comportement linéaire.

Ces conditions permettent de calculer le taux de restitution d'énergie critiqué Glc du système de collage en utilisant les théories linéaires de la mécanique de la rupture, dont les éléments principaux sont repris ci-après.

1.3/ Déroulement d'un essai de traction entre les deux têtes d'amarrage :

On enregistre la courbe donnant l'évolution de l'effort de chargement P (kN) en fonction du déplacement D (mm) de la traverse de la machine de traction, c'est à dire de l'écartement des deux têtes 8, 8'.

En pratique, après fixation à la machine de traction, l'éprouvette est tractionnée à une vitesse constante (égale à 2 mm/min) jusqu'à faire propager la fissure sur une longueur supplémentaire de 5 à 10 mm (on mesure cette propagation sur l'un des deux côtés de l'éprouvette) ; dés que cette propagation débute, l'effort mesuré P décroît, bien que l'on n'ait pas modifié le sens de déplacement de la traverse de la machine de traction.

Après avoir fait propager la fissure sur la longueur voulue, on décharge l'éprouvette en inversant le sens de déplacement de la traverse (sens négatif de déplacement) ce qui a pour effet d'arrêter la propagation de fissure ; ce déchargement doit s'opérer jusqu'à une valeur d'effort suffisamment basse, égale par exemple à 1/3 de la force maximale mesurée lors de l'arrêt précédent de propagation de fissure, c'est à dire juste avant le début du déchargement.

Après avoir effectué le déchargement jusqu'à cette valeur « basse », on recharge l'éprouvette en inversant à nouveau le sens de déplacement de la traverse (sens positif de déplacement) jusqu'à faire reprendre la propagation de la fissure sur une longueur de 5 à 10 mm supplémentaires, avant de réitérer l'opération de déchargement décrite ci-avant.

Pour une bonne conduite de l'essai, six à huit séries de "déchargements-chargements" sont réalisées par éprouvette ; on obtient alors une courbe du type de celle de la figure 7.

1.4/ Exploitation des résultats :

On utilise une méthode de calcul dite théorique.

L'expression théorique du taux de restitution d'énergie Glc est donnée par la relation (1) :

$$\text{Glc} = (P^2/(2 \bullet b)) \bullet (dC/da) \tag{1}$$

Avec

P : effort appliqué
b : largeur de l'éprouvette
dC/da : dérivée de la complaisance par rapport à la longueur de fissure, où la complaisance C désigne le ratio déplacement D / effort P.

La méthode « théorique » utilisée est basée sur la théorie des poutres : chaque demi-éprouvette peut être assimilée à une poutre encastrée au niveau du front de fissure, comme représenté à la figure 6 où la zone d'encastrement « fictif » est représentée par la zone hachurée ; en tête de fissure, on considère que le déplacement D (dans la direction de traction) et la déviation (dans la direction de propagation de fissure) sont nuls ; enfin, on considère que la charge appliquée P est répartie sur toute la longueur m de la tête d'amarrage.

La théorie des poutres nous permet de déterminer l'expression de la flèche w de chaque demi-éprouvette suivant l'axe moyen de chargement :

$$w = P \bullet (a-m/2)^3 \bullet (1+0.5 \bullet (m/(4 \bullet (a-m/2)))^3)/(3 \bullet E \bullet l) \tag{2}$$

Avec :

a : longueur totale de la fissure
m : longueur des têtes d'amarrage
l : moment d'inertie en flexion de la poutre => $l = b . h^3 / 12$
h : épaisseur totale de la poutre
b : largeur de l'éprouvette
P : effort appliqué
E : module d'Young de la tôle des flans en acier de l'éprouvette.

On en déduit l'expression de la complaisance C de l'éprouvette globale ($C = 2 * w / P$) ; à partir de cette expression, on calcule ensuite la dérivée par rapport à a, dC/da ; on intègre ensuite le résultat à la relation (1) ; on obtient :

$$\text{Glc} = 12 \bullet P_A^2 \bullet (a-m/2)^2 / (E \bullet b^2 \bullet h^3) \tag{3}$$

Avec :

- m : longueur des têtes d'amarrage : 0,003 m.
- h : épaisseur de la tôle d'acier : 0.004 m.
- b : largeur de l'éprouvette : 0.025 m
- $P_A$ ( en N ) : force correspondant au point d'intersection de la partie de courbe associée au déchargement et de la partie de courbe associée au chargement : points A1 à A8 de la figure 7.
- a : longueur totale de la fissure ( en m ) = longueur initiale a° + longueur de propagation mesurée pour la force $P_A$ dudit point d'intersection.

Pour chaque éprouvette, on évalue la valeur de Glc pour chaque point A d'intersection de courbe (cf. figure 7 : points A1 à A8), c'est à dire pour chaque cycle déchargement-chargement de l'essai; comme valeur finale de Glc caractérisant le système de collage, on retient la moyenne arithmétique de ces valeurs réalisées ; on calcule l'écart type correspondant à cette moyenne ; on observe ensuite le faciès de propagation de la fissure, c'est à dire le faciès de rupture de l'éprouvette au niveau du joint de collage.

2) Description de la méthode utilisée pour évaluer le taux de restitution d'énergie critique en mode II, noté Gllc, d'un système de collage, à partir d'essais de cisaillement sur une éprouvette « ENF » en mode II (cisaillement) :

« ENF » est l'abréviation de l'expression anglaise « End Notch Flexure ».

2.1/ Principe de l'essai

L'essai mis en oeuvre consiste à faire propager une fissure au sein d'un joint collé sollicité en cisaillement et à mesurer la résistance de ce joint à la propagation de cette fissure.

2.2/ Géométrie et dimensions de l'éprouvette testée.

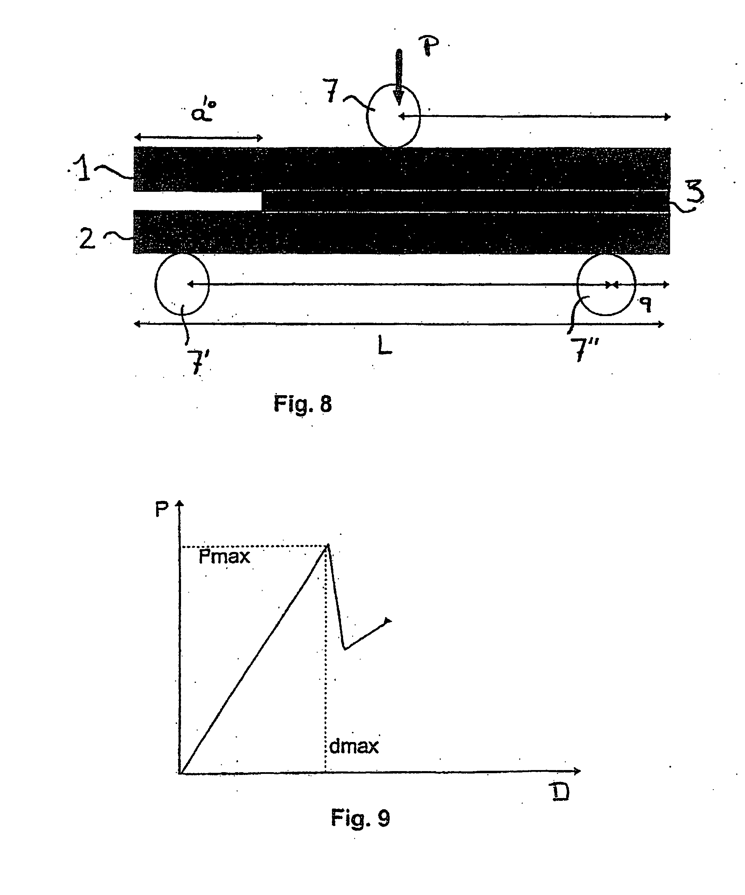

Les éprouvettes « ENF » utilisées (cf. figure 8) sont quasiment identiques à celles utilisées pour l'essai destiné au calcul de Glc, aux différences près suivantes :

- longueur totale : 200 mm.
- longueur de la fissure initiale : $a'^{\circ}$ = 47,5 mm.

Les caractéristiques des flans d'acier sont identiques à celles des tôles composites de l'essai précédant, pour les mêmes raisons déjà invoquées.
Comme représenté à la figure 8, l'éprouvette « ENF » est testée sur un banc classique de « flexion trois points » comprenant trois rouleaux d'appui : un rouleau supérieur 7 positionné au milieu de l'éprouvette, deux rouleaux inférieurs T et 7" positionnés à chaque extrémité.

2.3/ Déroulement de l'essai.

On enregistre la courbe donnant l'évolution de l'effort P de chargement en fonction du déplacement D de la traverse de la machine de traction travaillant en compression comme l'indique la flèche centrale de la figure 8.
Après avoir positionné l'éprouvette sur le banc de « flexion trois points », on impose un déplacement vertical à vitesse constante (égale à 1.25 mm/min) du rouleau supérieur 7 jusqu'à amorcer une propagation de la fissure dès que cette propagation débute, l'effort mesuré décroît.
Pour un grand nombre d'adhésifs, comme l'illustre la courbe de la figure 9, on constate que cette propagation est très rapide (quasi instantanée) il n'est donc généralement pas possible d'opérer une série de « déchargement-chargement » comme précédemment.
Pour chaque éprouvette, on enregistre la courbe « effort-déplacement » (cf. figure 9); on relève l'effort maximal (noté Pmax) et le déplacement de la traverse associé (noté dmax), correspondant au début de propagation de la fissure.

2.4/ Exploitation des résultats.

Dans le cadre de cet essai, l'évaluation du taux de restitution d'énergie critique est réalisée par la mise en oeuvre d'une méthode théorique basée sur la théorie des poutres.
L'expression théorique du taux de restitution d'énergie Gllc est donnée par la relation (1):

$$\text{Gllc} = (\ P^2 / (2 \bullet b)) \bullet (dC/da) \tag{4}$$

Avec

P : effort appliqué
b : largeur de l'éprouvette
dC/da : dérivé de la complaisance par rapport à la longueur de fissure.

En utilisant, la théorie des poutres, nous pouvons déterminer l'expression de la complaisance élastique C de l'éprouvette :

$$C = (2 \cdot L^3 + 3 \cdot a^3)/(8 \cdot E \cdot b \cdot h^3) \qquad (5)$$

Avec :

L : demi-distance entre appuis (L = 75 mm),
a : longueur de la fissure correspondant à : a° + longueur de propagation.
h : épaisseur totale de la poutre
b : largeur de l'éprouvette
E module d'Young.

En calculant dC/da à partir de l'expression (5), puis en reportant le résultat dans la relation (4) on obtient l'expression suivante du taux de restitution d'énergie critique Gllc du système de collage testé :

$$Gllc = 9 \cdot a°^2 \cdot Pmax \cdot dmax / (2 \cdot b \cdot (2 \cdot L^3 + 3 \cdot a°^3)) \qquad (6)$$

Avec

- a° : longueur initiale de la fissure ( en m ) mesurée entre les deux rouleaux d'appui inférieurs 7' et 7" ; comme ces rouleaux sont distants de l'extrémité de l'éprouvette de q = 25 mm, on a : a° = a'°- q = 47,5 mm - 25 mm 22,5 mm 0.0225 m.
- b : largeur de l'éprouvette = 0.025 m
- Pmax ( en N ) : effort maximal relevé lors du début de propagation.
- dmax (en m) : déplacement de la traverse associé à Pmax.

Pour chaque éprouvette, on évalue ainsi la valeur de Gllc et on observe le faciès de rupture après le test.

3) <u>Description de la méthode utilisée pour évaluer les niveaux d'adhérence, de ductilité et de ténaticité d'un système de collage.</u>

3.1/ Géométrie des éprouvettes :

Les éprouvettes de tôle composite utilisées sont représentées sur la figure 1.
Chaque éprouvette comprend un flan principal 1, de longueur 200 mm et d'épaisseur 0,8 mm, renforcé sur la moitié de sa longueur par un flan doubleur 2 de longueur 100 mm et de même épaisseur; la liaison entre le flan doubleur 2 et le flan principal est assurée par le système de collage 3 à tester ; la largeur de l'éprouvette est de 25 mm.
On utilise des tôles d'acier de différents types.

3.2/ Déroulement de l'essai :

Pour l'essai, l'extrémité la plus épaisse de cette éprouvette est encastrée dans un mors fixe alors qu'on impose un déplacement à l'extrémité opposée par traction dans le plan de la tôle la vitesse de déplacement imposée est égale à 5 mm/min.
Cet essai permet de reproduire les principales sollicitations subies par les systèmes de collage lors des opérations de mise en forme de tôles composites ou « flans collés », notamment lors des opérations d'emboutissage ; il permet ainsi d'évaluer si les niveaux d'adhérence et de ductilité d'un système de collage donné appliqué sur une tôle d'acier donnée sont suffisants pour supporter les déformations plastiques imposées aux flans d'acier pendant l'emboutissage ; il permet également d'évaluer qualitativement la résistance du système de collage aux contraintes de cisaillement et de pelage générées au niveau de la singularité géométrique (Zone 6), et, à ce titre, d'évaluer la ténacité du système de collage.
Pendant le déplacement et la traction, on enregistre la courbe donnant l'évolution de l'effort de chargement en fonction du déplacement de la traverse de la machine de traction ; on détermine l'effort (noté Fd) à partir duquel on constate le début de la rupture du joint collé ou, le cas échéant, on note l'effort correspondant à la rupture de l'éprouvette par striction du flan principal 1 de plus grande longueur.
Si la rupture de l'éprouvette s'opère par délamination du joint collé 3, on repère la zone de rupture de l'éprouvette :

- Rupture au milieu du joint collé : rupture cohésive ;
- Rupture dans le joint collé au voisinage de la tôle d'acier : rupture cohésive superficielle ;
- Rupture à l'interface « colle /flan » : rupture adhésive ;
- Rupture dans le revêtement de l'acier : rupture par arrachement du revêtement.

### 3.3/ Exploitation des résultats

- dans le cas où l'on observe une rupture de l'éprouvette par striction du flan d'acier 1 sans rupture préalable du joint collé 3, on considère que le système de collage peut être suffisamment performant pour former des tôles composites emboutissables.

- si, par contre, on observe un début de rupture du joint collé avant l'apparition d'une striction de ce flan 1, on considère que le système de collage utilisé est impropre à la formation de tôles composites emboutissables.

### 4) Description de l'essai standard d'emboutissage permettant de vérifier que la satisfaction des critères portant sur l'adhérence, la ductilité et sur Glc et Gllc garantit l'aptitude à l'emboutissage.

4.1/ Principe de l'essai

L'essai mis en oeuvre consiste à emboutir une éprouvette de tôle composite de forme circulaire pour lui donner la forme d'un godet à fond plat, et à déterminer la profondeur maximale de pénétration du poinçon d'emboutissage au delà de laquelle on assisterait à une rupture de l'éprouvette.

4.2/ Géométrie et dimensions de l'éprouvette testée.

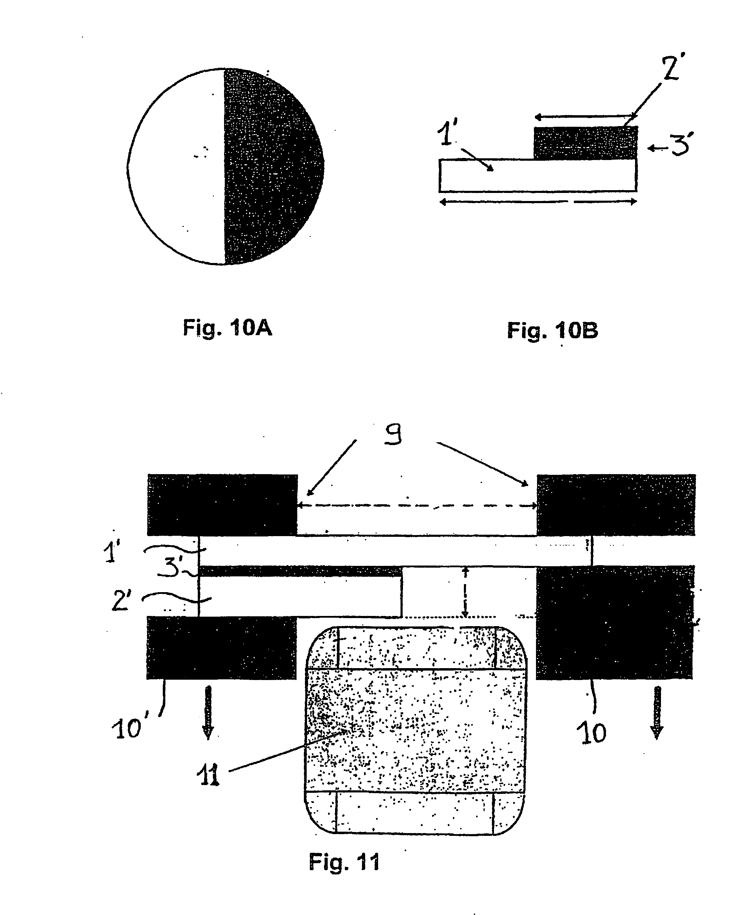

L'éprouvette testée pour caractériser l'aptitude à l'emboutissage de flans collés est représentée en vue de dessus sur la figure 10 A et en coupe sur la figure 10 B ;

L'éprouvette présente un diamètre externe de 130 mm ; elle est formée par un flan principal 1' de même diamètre, d'épaisseur 0,8 mm, renforcé sur la moitié de sa surface par un flan 2' d'épaisseur 0,6 mm, lié au flan principal 1' par le système de collage 3' à tester.

4.3/ Déroulement de l'essai :

Les essais d'emboutissage sont réalisés sur une presse industrielle de 0.8 MégaNewtons de puissance, selon un montage représenté en coupe schématique sur la figure 11.

La machine d'emboutissage comprend une matrice 9, un poinçon d'emboutissage 11, et un jeu de serre-flans 10, 10' adaptés à la géométrie de l'éprouvette et à son maintien lors de l'opération d'emboutissage.

Le diamètre interne de la matrice d'emboutissage 9 est de 64 mm; le poinçon 11 présente un diamètre externe de 60 mm et un rayon de courbure de 7 mm.

Pour l'emboutissage, le poinçon d'emboutissage 11 est fixe alors que l'ensemble « Matrice/Serre-Flan » est mobile.

Une série d'essai permet de déterminer la profondeur de pénétration maximale du poinçon ne donnant pas lieu à une rupture de l'éprouvette ; plus cette profondeur maximale d'emboutissage est grande, meilleure est l'aptitude à l'emboutissage de l'éprouvette de tôle composite.

Pour chaque échantillon, l'effort appliqué par le serre-flan 10, 10' à l'éprouvette a été optimisé, avant de chercher à déterminer la profondeur maximale d'emboutissage.

RÉSULTATS :

### 1) Valeurs moyennes de Glc et de Cllc pour les différents systèmes de collage :

En utilisant les méthodes décrites ci-dessus (§MÉTHODES, §1 et §2), on détermine les valeurs moyennes des taux de restitution d'énergie critique en mode I (Glc) et en mode II (Gllc) des différents systèmes de collage décrits ci-dessus (§MATÉRIELS), en testant, pour chaque système de collage, 3 à 5 éprouvettes.

Les valeurs obtenues sont reportées au tableau I avec l'écart-type σ.

Pour les systèmes de collage 4, 5 et 7, il n'a pas été possible de déterminer précisément les valeurs de Glc et de Gllc ; de même pour le système de collage 6, il n'a pas été possible de déterminer la valeur de Gllc ; en effet, les flans d'acier des éprouvettes de tôle composite réalisés à l'aide de ces systèmes de collage se sont déformés par plastification avant que les joints collés de ces éprouvettes ne se rompent ; on a donc affecté à ces systèmes de collage des valeurs minimales de Glc et de Gllc, calculées en prenant en référence l'effort à partir duquel les tôles d'acier se sont plastifiées.

Tableau I :

| Valeurs des taux de restitution d'énergie critique | | | | |
|---|---|---|---|---|
| Taux de restitution d'énergie critique : N° du Système de collage : | Glc J/m$^2$ | σ | Gllc J/m$^2$ | σ |
| 1 : base époxy monocomposant | 250 | 60 | 360 | 100 |
| 2 : base polystyrène | 300 | 50 | 450 | 70 |
| 3 : base PMMA | 250 | 55 | 500 | 80 |
| 4 : base polypropylène | > 3800 | - | > 2700 | - |
| 5 : base polyéthylène | > 3800 | - | > 2600 | - |
| 6 : base film époxy tramé | 3080 | 150 | > 2000 | - |
| 7 : base PVC | > 3800 | - | > 2700 | - |

2) <u>Évaluation de l'allongement à la rupture en traction des différents systèmes de collage :</u>

Pour les systèmes de collage constitués d'une âme thermoplastique (systèmes de collage 2 à 5 et le système 7), des essais de traction ont été réalisés sur des films libres de dimensions 20 mm * 150 mm réalisés à partir de ces systèmes ou, le cas échéant, de l'âme de ces systèmes, afin d'évaluer l'allongement à la rupture de ces systèmes ; pour ces essais de traction, la distance initiale entre les mors est de l'ordre de 100 mm et la vitesse de déformation appliquée est comprise entre 0.001 s$^{-1}$ et 0.1 s$^{-1}$.

Pour les deux systèmes de collage 1 et 6, les valeurs d'allongement indiquées sont obtenues à partir d'essais de traction sur des éprouvettes haltères d'adhésif massif.

Les valeurs d'allongement à la rupture ainsi déterminées sont reportées dans le tableau II ci-après.

Tableau II :

| Allongement à la rupture des systèmes de collage. | |
|---|---|
| N° du Système de collage : | Allongements à la rupture en traction (en %) |
| 1 : base époxy monocomposant | 0.5 % |
| 2 : base polystyrène | 2 % |
| 3 : base PMMA | 5 % |
| 4 : base polypropylène | > 500 % |
| 5 : base polyéthylène | > 500 % |
| 6 : base film époxy tramé | 20 % |
| 7 : base PVC | 280 % |

3) <u>Évaluation des niveaux d'adhérence, de ductilité et de ténacité d'un système de collage d'une tôle composite :</u>

Cette évaluation est réalisée selon la méthode exposée au §MÉTHODES §3 ; dans le but de mettre en oeuvre cette méthode, on prépare des éprouvettes de tôle composite en utilisant, pour les flans, des tôles d'acier galvanisées (épaisseur de revêtement de l'ordre de 10 μm par face) présentant les caractéristiques récapitulées au tableau III ci-après.

Tableau III -

| Caractéristiques des tôles d'acier utilisées pour les éprouvettes | | | | | |
|---|---|---|---|---|---|
| Tôle d'acier | Épaisseur | Limite élastique Rp (0.2%) | Résistance maximale Rm | Allongement réparti (1) | Allongement à la rupture (2) |
| ES | 0.8 mm | 155 MPa | 300 MPa | 23.5 % | ≈ 40 % |
| SOLPHOR™ | 0.8 mm | 260 MPa | 390 MPa | 19.5 % | ≈ 30 % |
| SOLDUR™ | 0.8 mm | 370 MPa | 430 MPa | 16.5 % | ≈ 20 % |

(1) correspondant à la résistance maximale Rm.

(2) valeurs indicatives.

On met en oeuvre l'essai ci-dessus (§MÉTHODES §3), de manière à reproduire les principales sollicitations que des tôles composites seraient amenées à supporter lors de diverses opérations de mise en forme et plus particulièrement d'emboutissage.

Les résultats obtenus pour chaque éprouvette concernent donc les performances d'un couple (tôle d'acier, système de collage) d'une tôle composite donnée.

Pour chaque type de tôle composite associant un système de collage et un type de tôle d'acier, on mesure l'effort moyen (noté « Fd ») lors de l'initialisation de la rupture ; on observe et on évalue ensuite le mode de rupture (noté « M.R. ») ; pour chaque type de tôle composite, on teste entre 3 et 5 éprouvettes ; les résultats obtenus sont reportés dans le tableau IV.

Tableau IV -

| Adhérence de différents systèmes de collage sur différents aciers. | | | | |
|---|---|---|---|---|
| Systèmes de collage | *Obs.* | Tôles d'acier ES | Tôles d'acier SOLPHOR™ | Tôles d'acier SOLDUR™ |
| 1 époxy monocomposant | Fd | 4600 N | 6100 N | 7750 N |
| | M.R. | Rupture par délamination au sein du joint collé (rupture dans l'adhésif) | | |
| 2 base polystyrène | Fd | 4670 N | 6200 N | 7700 N |
| | M.R. | Rupture par délamination au sein du système de collage (rupture dans l'âme polystyrène) | | |
| 3 base PMMA | Fd | 4550 N | 6150 N | 7800 N |
| | M.R. | Rupture par délamination au sein du joint collé (rupture dans l'âme PMMA) | | |
| 4 base polypropylène | Fd | 5500 N | 7000 N | 8500 N |
| | M.R. | Rupture par striction de l'acier | | |
| 5 base polyéthylène | Fd | 5450 N | 7050 N | 8450 N |
| | M.R. | Rupture par striction de l'acier | | |
| 6 base film époxy aéronautique | Fd | Non testé | 6725 N | 8000 N |
| | M.R. | Non testé | Rupture mixte : principalement par délamination au sein du joint collé avec un début de striction de l'acier | Rupture mixte : principalement par striction de l'acier avec un début de délamination au sein du système de collage |
| 7 base PVC | Fd | 5450 N | 7025 N | 8450 N |
| | M.R. | Rupture par striction de l'acier | | |

4) Comparaison des caractéristiques intrinsèques du système de collage et des performances des tôles composites en termes d'effort moyen (Fd) lors de l'initialisation de la rupture et de mode de rupture (M.R.).

- Définition des systèmes de collage selon l'invention -

- Les résultats reportés dans le tableau IV illustrent, au moins partiellement, l'invention selon laquelle le système de collage des tôles composites doit, pour que ces tôles soient emboutissables sans détérioration, présenter au moins les caractéristiques générales suivantes :

    - des valeurs de Glc supérieures à 1500 J/m2
    - et des valeurs de Gllc supérieures à 2000 J/m2.

- Les systèmes de collage 4 à 7 satisfont ces critères selon l'invention.
- Lorsque ces critères concernant le système de collage sont satisfaits (cf. Tableau I), les résultats reportés au Tableau IV concernant l'effort moyen (noté « Fd ») lors de l'initialisation de la rupture et le mode de rupture (noté « M.R. ») montrent que les tôles composites réalisées à partir de ces systèmes de collage sont emboutissables quelque soit le type de tôles utilisées (ES, SOLPHOR™ et SOLDUR™) pour les flans collés de ces tôles composites.
- Une caractéristique additionnelle du système de collage porte sur le critère classique d'allongement à la rupture qui doit être au moins égal à celui du métal des flans collés de la tôle composite.

Parmi les systèmes de collage satisfaisant les critères précédents, on constate (cf. Tableaux II et IV) que le système de collage 6 satisfait à peine ce critère additionnel en combinaison avec l'acier SOLDUR™ mais ne le satisfait pas du tout en combinaison avec l'acier SOLPHOR™.

Autres commentaires :

- Quelque soit le type de tôle utilisé, on observe une délamination du joint collé pour les éprouvettes réalisées avec les systèmes 1, 2 et 3 , délamination qui intervient juste après la mise en plastification des tôles d'acier ; cette délamination n'est pas due à une mauvaise adhérence, comme en témoignent les faciès de rupture observés : ruptures cohésives au sein du système de collage ; cette délamination traduit le fait que ces systèmes présentent des valeurs d'allongement à la rupture et des valeurs de Glc et de Gllc trop faibles.
- A l'inverse, quel que soit le type de tôle utilisé, on n'observe aucune délamination du joint collé pour les éprouvettes réalisées avec les systèmes de collage 4, 5 et 7 ; avec ces systèmes de collage qui satisfont les critères selon l'invention, la rupture des éprouvettes s'est opérée par striction des tôles d'acier à des valeurs d'effort supérieures aux valeurs d'effort observés lors du début de la délamination des éprouvettes collées avec les systèmes 1, 2 et 3.
- Les résultats obtenus avec le système 6 (base film époxy tramé) montrent que des valeurs minimales de Glc et de Gllc ne constituent pas un ensemble de critères suffisants pour garantir la résistance du système de collage aux sollicitations mécaniques imposées lors des opérations d'emboutissage ; pour les deux types de tôle utilisés, les valeurs d'efforts à la rupture des éprouvettes sont inférieures à celles des systèmes de collage 4, 5 et 7 ; en outre, sur les tôles composites réalisés à l'aide de ce système 6, on observe un mode de rupture mixte : rupture par striction de l'acier et rupture par délamination du système de collage ; cette délamination est très importante dans le cas des tôles SOLPHOR™ ; cette délamination est due au fait que la ductilité intrinsèque du système de collage n'est pas suffisante pour accompagner les déformations plastiques des tôles d'acier utilisées.

5) Évaluation des résultats d'emboutissage de différents tôles composites basées sur des systèmes de collage différents :

Cette évaluation est réalisée selon la méthode exposée au §MÉTHODES §4 ; dans le but de mettre en oeuvre cette méthode, à l'aide des sept systèmes de collage 3' précédemment définis (§MATÉRIELS), on prépare deux types de d'éprouvettes se différenciant par la tôle utilisée pour le flan principal 1' et par la tôle utilisée pour le flan doubleur 2' (cf. figures 10A et 10B); les deux configurations étudiées sont récapitulées au tableau V.

Tableau V -

| Types de tôles composites testées en emboutissage. | | |
|---|---|---|
| Configuration | Flan principal | Doubleur |
| 1 | Tôle ES - épaisseur : 0.8 mm | Tôle ES - épaisseur : 0.6 mm |
| 2 | Tôle ES - épaisseur : 0.8 mm | Tôle SOLDUR - épaisseur :0.6 mm |

On a reporté dans le tableau VI ci-après les valeurs moyennes des profondeurs maximales d'emboutissage mesurées pour les deux configurations (« config. ») et les sept systèmes de collage de tôle composite ; chaque valeur moyenne a été déterminée à partir d'essais réalisés sur 3 à 5 éprouvettes.

6) Comparaison des caractéristiques intrinsèques du système de collage et des performances des tôles composites en termes d'emboutissabilité évaluée d'après la profondeur maximum d'emboutissage.

- Confirmation de la définition des systèmes de collage selon l'invention -

- Les résultats reportés au tableau VI ci-après montrent que les tôles composites réalisées avec les systèmes de collage 4, 5 et 7 présentent, quelque soit la configuration :

  - une bonne aptitude à l'emboutissage : au moins 20 mm de profondeur maximum d'emboutissage, équivalente pour les trois systèmes.
  - un même mode et un même lieu de rupture lorsque la profondeur d'emboutissage imposée dépasse la valeur de la profondeur maximale d'emboutissage : rupture par striction du métal dans la tôle de plus fine épaisseur et localisation de l'amorce de rupture au voisinage de la surépaisseur.

  On ne constate aucune délamination des systèmes de collage.
- Inversement, les résultats montrent que les tôles composites réalisées avec les systèmes de collage 1, 2 et 3 présentent, quelque soit la configuration, une mauvaise aptitude à l'emboutissage au plus 15 mm de profondeur maximale d'emboutissage.
  Les valeurs maximales d'emboutissage obtenus avec ces systèmes de collage 1, 2 et 3 sont limitées par l'apparition d'une délamination notable (et inacceptable) des doubleurs collés lorsque l'on dépasse ces valeurs de profondeur maximale d'emboutissage.
- Les tôles composites réalisées à partir du système de collage 6 ne présentent pas une aptitude à l'emboutissage très satisfaisante, quelle que soit la configuration (1 ou 2) ; en effet :

  - même si la valeur de profondeur maximale d'emboutissage est très proche (bien qu'inférieure) de celle des systèmes satisfaisants 4, 5 et 7,
  - même si on observe bien, comme pour ces systèmes, une rupture des éprouvettes par striction de l'acier dans le flan de plus fine épaisseur lorsque la profondeur d'emboutissage imposée dépasse la valeur de la profondeur maximale d'emboutissage,
  - on observe cependant une délamination importante des flans doubleurs collés en fond de godets pour les deux configurations ; ces délaminations sont dues au fait que la ductilité du système de collage utilisé n'est pas suffisante par rapport à celle de l'acier ES pour supporter les déformations plastiques importantes de l'acier en fond de godet.

  Ces délaminations ne sont pas acceptables pour la tenue en service de telles tôles composites embouties : elles vont favoriser la diffusion et la rétention de l'eau au sein des systèmes de collage et ainsi dégrader la durabilité et la tenue à la corrosion des flans collés ces délaminations vont également être pénalisantes pour la tenue en fatigue des pièces formées.

De manière générale, les essais d'emboutissage montrent que, conformément à l'invention, des systèmes de collage présentant une valeur de Glc supérieure à 1500 J/m$^2$, une valeur de Gllc supérieure à 2000 J/m$^2$ et une valeur de déformation à la rupture supérieure à celle du métal de la tôle composite, permettent de réaliser des tôles composites présentant une très bonne aptitude à l'emboutissage ; d'autres essais ont montré que, dans les conditions de l'invention, l'aptitude à l'emboutissage était comparable à celle de tôles obtenues par raboutage et soudage au LASER de flans d'épaisseurs différentes.

Tableau VI -

| Résultats d'emboutissage. | | | |
|---|---|---|---|
| Tôle composite testée | | Profondeur maximale emboutissage (mm) | Observations sur le Mode de Rupture (si profondeur d'emboutissage > maxi.) |
| Config. | Systèmes collage | | |
| 1 | 1 - époxy monocomposant | 14 | Rupture par délamination du doubleur |
| | 2 - polystyrène | 14 | Rupture par délamination du doubleur |
| | 3 - PMMA | 15 | Rupture par délamination du doubleur |
| | 4 - polypropylène | 21 | Rupture par striction de l'acier ; pas de délamination du doubleur |
| | 5 - base polyéthylène | 21 | Rupture par striction de l'acier ; pas de délamination du doubleur |
| | 6 - film époxy tramé | 19 | Rupture par striction de l'acier ; délamination du doubleur en fond de godet (zone où niveaux élevés de déformation en expansion de l'acier) |
| | 7 - base PVC | 20 | Rupture par striction de l'acier ; pas de délamination du doubleur |
| 2 | 1 - époxy monocomposant | 13 | Rupture par délamination du doubleur |
| | 2 - polystyrène | 14 | Rupture par délamination du doubleur |
| | 3 - base PMMA | 14 | Rupture par délamination du doubleur |
| | 4 - base polypropylène | 21 | Rupture par striction de l'acier ; pas de délamination du doubleur |
| | 5 - polyéthylène | 21 | Rupture par striction de l'acier ; pas de délamination du doubleur |
| | 6 - film époxy tramé. | 19 | Rupture par striction de l'acier ; délamination du doubleur en fond de godet (zone où niveaux élevés de déformation en expansion de l'acier) |
| | 7 - base PVC | 20 | Rupture par striction de l'acier ; pas de délamination du doubleur |

**Revendications**

1. Tôle composite destinée à l'emboutissage comprenant au moins une tôle principale (1, 1') et au moins un flan de, tôle de doublage (2, 2') collé en sur-épaisseur sur une zone à renforcer de ladite tôle principale à l'aide d'un système de collage (3, 3'), **caractérisée en ce que** ledit système de collage est choisi, appliqué et, le cas échéant, réticulé, de manière à satisfaire les critères intrinsèques suivants, dans le domaine de température de l'opération d'emboutissage à laquelle elle est destinée :

- un taux de restitution d'énergie critique en mode I (traction) supérieur à 1500 J/m$^2$,
- un taux de restitution d'énergie critique en mode II (cisaillement) supérieur à 2000 J/m$^2$.

2. Tôle composite selon la revendication 1 **caractérisé en ce que** ledit système de collage est choisi de manière à satisfaire en outre le critère relatif suivant :

- une déformation à la rupture supérieure à celle du métal de ladite tôle principale (1, 1') et à celle du métal dudit flan doubleur (2, 2').

3. Tôle composite selon la revendication 2 **caractérisée en ce que** ledit système de collage est choisi de manière à présenter une déformation à la rupture supérieure à 40%.

4. Tôle selon l'une quelconque des revendications précédentes **caractérisée en ce que** ledit système de collage comprend une ou plusieurs résines thermoplastiques et/ou thermodurcissables et/ou élastomériques, qui peuvent être liées ou non par des liaisons physiques et/ou chimiques.

5. Tôle selon l'une quelconque des revendications précédentes **caractérisée en ce que** l'épaisseur dudit système de collage est comprise entre 0,05 et 5 mm.

6. Tôle selon l'une quelconque des revendications 1 à 5 **caractérisée en ce que** ledit système de collage comprend un matériau polymère choisi dans le groupe comprenant les polyoléfines et les polychlorures de vinyle.

7. Tôle selon l'une quelconque des revendications 1 à 5 **caractérisée en ce que** ledit système de collage comprend un matériau polymère polyoléfine **caractérisé par** une température de fusion supérieure à 120°C.

8. Tôle selon la revendicalion 7 **caractérisée en ce que** ledit système de collage comprend un matériau polymère polyoléfine **caractérisé par** une température de fusion supérieure à 160°C.

9. Tôle selon l'une quelconque des revendications 1 à 5, **caractérisée en ce que** ledit système de collage est choisi parmi: une âme polypropylène et un préencollage des tôles par un adhésif comprenant des radicaux époxy et du polypropylène greffé; une âme polyéthylène et un adhésif nitrile-phénolique; une âme PVC et un préencollage des tôles par un adhésif base polyester.

10. Tôle composite selon l'une quelconque des revendications précédentes **caractérisé en ce que** ledit système de collage comprend une âme en matériau polymère et deux couches minces d'adhésif, l'une étant intercalée entre ladite tôle principale et une face de l'âme, l'autre étant intercalée entre ladite tôle de doublage et l'autre face de l'âme.

11. Tôle selon la revendication 10 **caractérisée en ce que** l'épaisseur de chacune desdites couches minces est comprise entre 5 et 50 μm.

12. Procédé de fabrication d'une pièce formée à l'aide d'une tôle composite selon l'une quelconque des revendications précédentes **caractérisé en ce qu'**il comprend les étapes dans lesquelles :

- on prépare ladite tôle principale et l'au moins un flan de doublage,
- puis, en intercalant le système de collage, on applique ledit flan de doublage sur la zone à renforcer de ladite tôle principale,
- puis, le cas échéant, on fait réticuler ledit système de collage de manière à obtenir ladite tôle composite,
- puis on met en forme par emboutissage ladite tôle composite obtenue.

**Patentansprüche**

1. Zum Tiefziehen bestimmtes Verbundblech, das wenigstens ein Hauptblech (1, 1') und wenigstens ein Aufdoppelungsblechstück (2, 2') aufweist, das mit Hilf e eines Klebesystems (3, 3') auf einem zu verstärkenden Bereich des Hauptblechs aufgeklebt ist und dabei dessen Dicke erhöht, **dadurch gekennzeichnet, dass** das Klebesystem in der Weise ausgewählt, aufgetragen und gegebenenfalls vernetzt ist, dass im Temperaturbereich des Tiefziehens, für das das Verbundblech bestimmt ist, die folgenden inhärenten Kriterien erfüllt werden:

- ein kritischer Energiewiederherstellungsgrad von mehr als 1500 $J/m^2$ in einer Betriebsart I (Zug),
- ein kritischer Energiewiederherstellungsgrad von mehr als 2000 $J/m^2$ in einer Betriebsart II (Scherung).

2. Verbundblech nach Anspruch 1, **dadurch gekennzeichnet, dass** das Klebesystem in der Weise gewählt ist, dass es außerdem folgendes relatives Kriterium erfüllt:

- seine Bruchverformung liegt oberhalb der Bruchverformung des Metalls des Hauptblechs (1, 1') und oberhalb der Bruchverformung des Metalls des Aufdoppelungsblechstücks (2, 2').

3. Verbundblech nach Anspruch 2, **dadurch gekennzeichnet, dass** das Klebesystem in der Weise gewählt ist, dass es eine Bruchverformung aufweist, die oberhalb 40% liegt.

4. Blech nach einem der vorhergehenden Ansprüche, **dadurch gekennzeichnet, dass** das Klebesystem ein oder mehrere thermoplastische und/oder thermisch härtbare und/oder elastomere Harze umfasst, die durch physikalische und/oder chemische Bindungen gebunden sein können oder nicht.

5. Blech nach einem der vorhergehenden Ansprüche, **dadurch gekennzeichnet, dass** die Dicke des Klebesystems zwischen 0,05 und 5 mm beträgt.

6. Blech nach einem der Ansprüche 1 bis 5, **dadurch gekennzeichnet, dass** das Klebesystem ein Polymer aufweist, das aus der Gruppe gewählt ist, die die Polyolefine und die Polyvinylchloride umfasst.

7. Blech nach einem der Ansprüche 1 bis 5, **dadurch gekennzeichnet, dass** das Klebesystem ein Polyolefinpolymer umfasst, das durch eine über 120°C gelegene Schmelztemperatur **gekennzeichnet** ist.

8. Blech nach Anspruch 7, **dadurch gekennzeichnet, dass** das Klebesystem ein Polyolefinpolymer umfasst, das durch eine über 160°C gelegene Schmelztemperatur **gekennzeichnet** ist.

9. Blech nach einem der Ansprüche 1 bis 5, **dadurch gekennzeichnet, dass** das Klebesystem gewählt ist aus: einem Polypropylenkern und einer Vorbeschichtung der Bleche mit einem PVC-Klebstoff, der Epoxidradikale und veredeltes Polypropylen enthält; einem Polyethylenkern und einem Phenolnitrilklebstoff; einem PVC-Kern und einer Vorbeschichtung der Bleche mit einem Klebstoff auf Polyesterbasis.

10. Verbundblech nach einem der vorhergehenden Ansprüche, **dadurch gekennzeichnet, dass** das Klebesystem einen Polymerkern und zwei dünne Klebstoffschichten umfasst, von denen eine zwischen dem Hauptblech und einer Oberfläche des Kerns und die andere zwischen dem Aufdoppelungsblech und der anderen Oberfläche des Kerns angeordnet ist.

11. Blech nach Anspruch 10, **dadurch gekennzeichnet, dass** die Dicke der beiden dünnen Schichten jeweils zwischen 5 und 50 Mikrometer beträgt.

12. Verfahren zum Herstellen eines Teils, das mit Hilfe eines Verbundblechs nach einem der vorhergehenden Ansprüche gebildet wird, **dadurch gekennzeichnet, dass** das Verfahren folgende Schritte umfasst:

- das Hauptblech und das wenigstens eine Aufdoppelungsblechstück werden bereitgestellt,
- dann wird unter Zwischenlage des Klebesystems das Aufdoppelungsblechstück auf den zu verstärkenden Bereich des Hauptblechs gelegt,
- dann lässt man gegebenenfalls das Klebesystem sich vernetzen, um dadurch das Verbundblech zu erzielen,
- dann wird das erzielte Verbundblech durch Tiefziehen in Form gebracht.

**Claims**

1. Composite sheet metal for deep-drawing, comprising at least one main sheet (1, 1') and at least one lining blank (2, 2') adhered as an extra thickness to a zone of said main sheet which is to be reinforced, by means of an adhesive system (3, 3'), **characterised in that** the adhesive system is selected, applied and if necessary crosslinked so as to meet the following intrinsic criteria, within the temperature range of the deep-drawing operation for which the sheet is intended:

- a restoration level of critical energy in mode I (tension) greater than 1500 J/m$^2$,
- a restoration level of critical energy in mode II (shearing) greater than 2000 J/m$^2$.

2. Composite sheet according to claim 1, **characterised in that** the adhesive system is selected so as to further satisfy the following relative criterion:

- deformation at break greater than that of the metal of said main sheet (1, 1') and that of the metal of said lining blank (2, 2').

3. Composite sheet according to claim 2, **characterised in that** said adhesive system is selected so as to have a deformation at break greater than 40%.

4. Sheet according to any one of the preceding claims, **characterised in that** said adhesive system comprises one or more thermoplastic and/or thermohardenable and/or elastomeric resins which may or may not be bound by physical and/or chemical bonds.

5. Sheet according to any one of the preceding claims, **characterised in that** the thickness of said adhesive system is between 0.05 and 5 mm.

6. Sheet according to any one of claims 1 to 5, **characterised in that** said adhesive system comprises a polymeric material selected from among the polyolefins and polyvinyl chlorides.

7. Sheet according to any one of claims 1 to 5, **characterised in that** said adhesive system comprises a polyolefin polymeric material, **characterised by** a melting point above 120°C.

8. Sheet according to claim 7, **characterised in that** said adhesive system comprises a polyolefin polymeric material, **characterised by** a melting point above 160°C.

9. Sheet according to any one of claims 1 to 5, **characterised in that** said adhesive system is selected from among: a polypropylene core and pre-adhesion of the sheets using an adhesive comprising epoxy radicals and grafted polypropylene; a polyethylene core and a nitrile-phenol adhesive; a PVC core and pre-adhesion of the metal sheets with a polyester-based adhesive.

10. Composite sheet according to any one of the preceding claims, **characterised in that** said adhesive system comprises a core of polymeric material and two thin layers of adhesive, one being interposed between said main sheet and one side of the core, the other being interposed between said lining sheet and the other side of the core.

11. Sheet according to claim 10, **characterised in that** the thickness of each of said thin layers is between 5 and 50 μm.

12. Process for manufacturing a shaped part using a composite metal sheet according to any one of the preceding claims, **characterised in that** it comprises the steps wherein:

- said main sheet and the minimum of one lining blank are prepared,
- then, with the adhesive system intercalated, said lining blank is applied to the zone of said main sheet which is to be reinforced,
- then, if appropriate, said adhesive system is crosslinked so as to obtain said composite sheet,
- then said composite sheet obtained is shaped by deep-drawing.

**Fig. 1**

**Fig. 2**

**Fig. 3**

**Fig. 4**

**Fig. 5**

8

1

a⁰

3

2

8'

m

**Fig. 6**

P

8

w

a - m/2

**Fig. 7**

P
(KN)

A1

A8

D (mm)

1.0  2.0  3.0  4.0  5.0  6.0  7.0  8.0  9.0  10.0

Fig. 8

Fig. 9

Fig. 10A

Fig. 10B

Fig. 11